# EUROPEAN PATENT SPECIFICATION

(11) **EP 2 423 041 B1**
(45) Date of publication and mention of the grant of the patent: **05.06.2013**
(21) Application number: 11178657.0
(22) Date of filing: 24.08.2011
(51) Int. Cl.: B60N 2/64

(54) **Seat device having a function of retaining person's seated position**
Sitzvorrichtung mit einer Funktion zur Beibehaltung der Sitzposition einer Person
Dispositif de siège doté d'une fonction permettant de maintenir la position assise d'une personne

(30) Priority: 25.08.2010 JP 2010188419
(43) Date of publication of application: 29.02.2012
(73) Proprietor: DENSO CORPORATION, Kariya City Aichi 448-8661 (JP)
(72) Inventor: Inou, Hiroshi, Kariya-city, Aichi 448-8661 (JP); Sawada, Mamuro, Kariya-city, Aichi 448-8661 (JP); Totsuka, Seiji, Kariya-city, Aichi 448-8661 (JP); Nomura, Hisako, Osaka, Aichi 565-0872 (JP); Muraguchi, Kenichi, Itami-shi, Hyogo 664-0881 (JP); Mishima, Hiroyuki, Tokyo, 187-0002 (JP)
(74) Representative: Kuhnen & Wacker

(56) References cited:
- EP-A1- 0 107 627
- JP-A- 7 315 089
- US-A1- 2006 232 118

## Description

### BACKGROUND OF THE INVENTION

### [Technical Field of the Invention]

The present invention relates to a seat device having a function of retaining a person's seated position, and in particular, the seat device which can be realized as seats for vehicles, for example.

### [Related Art]

Document US 2006/232118 A1 (which corresponds to the preamble of claim 1) discloses an operator seat for an industrial vehicle comprising a seat back including a recess that contains a safety apparatus when the operator of the industrial vehicle leans back against the seat back, the safety apparatus attaching the operator to the industrial vehicle. According to this document, an operator seat on an industrial vehicle provides a recess in the seat back for receiving a safety harness or buckle and therefore, an operator can comfortably sit in the operator seat while at the same time being attached to the safety harness, and also the seat back may include piping that extends from or around the recess to further improve operator ergonomics.

It is known that chairs are widely used as seated position retention devices. Such chairs include a seat member on which a person is seated and an upper body support member that supports the upper back of the person. It is also known to use items for covering a chair and placed on a chair. In order to allow a person to be seated with ease, various suggestions have been made regarding the shapes of these seated position retention devices.

For example, patent document JP-A-H07-315089 discloses a pelvis support mechanism for vehicle seats. In this mechanism, a seat back (upper body support member) is divided into two members of an upper back and a lower back, and the lower back is made rotatable at a level corresponding to a lumbar support position. Thus, the angle of the lower back in this mechanism is made adjustable to match a hip point of a seated person, so that the person will not get easily tired.

Seated position retention devices, such as the mechanism disclosed in the above Japanese patent document, are purposed not to allow a seated person to easily get tired but are not purposed to ease seated person's breathing. It is favorable, as a matter of course, to make a seated person's breathing easy.

### SUMMARY OF THE INVENTION

The present invention has been made in light of the above condition and has as its object to provide a seated position retention device and a seat device which are able to ease a person's breathing in a seated state.

The present invention provides a seat device for retaining a person's seated position, of which technical concept can also be practiced as a seated position retention device. In this column, the seat device is representative both devices.

In the present invention, "retaining a person's seated position" intends to mean "assisting a person to retain their seating position."

In order to achieve the above object, according to the present invention as defined in claim 1, the seat device of the present invention includes an upper body support surface which is provided with rib support slant ridges (or simply slant ridges). The rib support slant ridges are butted against ribs from beneath, which are descended in exhalation. The rib support slant ridges are slanted along the inclination of the ribs.

Some muscles are connected to lower ribs. When these muscles are contracted in exhalation, the ribs connected to the muscles are descended with the exhalation. In addition to this, there are various body tissues between ribs, which establish connection between ribs. Accordingly, if the rib support slant ridges are not provided, the muscles that contract in exhalation also allow descent of upper ribs to which the muscles are not connected.

In this regard, according to the first aspect of the present invention, the descent of the upper ribs is suppressed, to which the muscles that contract in exhalation are not directly connected. These upper ribs are located within a range covering the chest. Accordingly, when the descent of these upper ribs is suppressed, the chest is likely to be kept open. Thus, the seated person comes to be able to breathe with ease.
Additional features of the invention are disclosed in the dependent claims.

It is preferred, according to an additional feature of the present invention, that the rib support slant ridges are positioned between the ninth and the tenth ribs, being in contact with them.

The tenth and lower ribs are included in an abdominal muscle system to which the abdominal muscles are connected, and thus are descended with the contraction of the abdominal muscles. On the other hand, the ninth and upper ribs are not connected to the abdominal muscles but to inspiratory muscles. Therefore, when the rib support slant ridges are positioned between the ninth and the tenth ribs, being in contact with them, these ribs are efficiently suppressed from being lowered by the muscles in the abdominal muscle system, while the motion of the inspiratory muscles is not hindered. In this way, the advantage of easing the person's breathing is enhanced.

The seat device, according to an additional feature of the present invention, may include a seat surface on which a person is seated. When the seat surface is provided, it is preferred, according to an additional feature of the present invention, that the upper body support surface includes a pair of ilium support projections (or simply support projections) which are butted against a pair of ilium projections, and the seat surface includes a pair of ischium accommodating recesses which accommodate a pair of ischium projection shaping portions.

Although the details will be described later, the ilium support projections and the ischium accommodating recesses will not easily allow a seated person's pelvis to lean rearward, and thus a submarine phenomenon is unlikely to be caused. Thus, the posture of the seated person is adequately retained with ease. Not easily causing a submarine phenomenon means that the posture of the seated person with upright upper body is easily retained. Thus, in the posture in which the upper body is upright, less pressure is applied to the chest, allowing the seated person to breathe more easily. Since the retention of the posture becomes easy, the seated person will recover from fatigue earlier.

Further, since the ilium support projections and the ischium accommodating recesses are provided, a seated person is able to fully hold the person's feet on the floor. Thus, the seat device of the present invention may be favorably used for a driver's seat of a vehicle, in which the brake pedal or the accelerator pedal is required to be operated. The reasons why a seated person is able to fully hold their feet on the floor will also be described later.

The size or pelvis depends on individual persons. Therefore, the positions of ilia and ischia, which are part of the pelvis, of a person in a seated state depend on the persons seated. Therefore, it will be most preferred to determine the positions of the ilium support projections and the ischium accommodating recesses on an individual person basis.

Meanwhile, the size of pelvis is not so greatly different between individual persons if the individual persons are adults. Therefore, the positions of the ilium support projections and the ischium accommodating recesses may not be required to be determined on an individual person basis. In this case, the positions of the ilium support projections and the ischium accommodating recesses may be determined by limiting attributes, such as male adult or female adult, of a seated person and considering an average pelvis of the persons having the limited attributes. More preferably, the size of the ilium support projections and the ischium accommodating recesses may be determined considering a variation range of the pelvises of the persons having the attributes.

It is preferred, according to an additional feature of the present invention, that the seat surface further includes a pair of thigh position reference ridges (or simply reference ridges). Each of the thigh position reference ridges is provided so as to be fitted to a recess between the biceps femoris muscle and the semimembranosus muscle of the respective one of the left and right thighs.

Being provided with the thigh position reference ridges, the thighs of a person in a seated state will stably stay in position. When the upper body of the seated person is moved in the horizontal direction as well, the upper body is easily restored to an original upright posture with reference to the thighs stably staying in position. Thus, the seated person comes to be able to breathe more easily.

It is preferred, according to an additional feature of the present invention, that the upper body support surface is further provided with shoulder blade aid ridges (or simply aid ridges). The shoulder blade aid ridges are substantially horizontal and are located within a vertical range covering the fifth to the seventh ribs. Each of the shoulder blade aid ridges has a backbone-side end portion which is located between backbones and the corresponding shoulder blade.

The shoulder blade aid ridges, being substantially horizontally provided, hinder a tilting motion of the seated person's upper body in the horizontal direction. Thus, since the horizontal tilting motion of the upper body is suppressed, the upright posture of the seated person is more easily retained.

Being provided with the shoulder blade aid ridges, a backbone-side end portion of each of the shoulder blade aid ridges, which is positioned between the backbones and a backbone-side end of the corresponding shoulder blade, is used as a fulcrum of turn of the person in a seated state, aiding the turning of the corresponding shoulder blade. Thus, the motion of the shoulders accompanying the turning of the shoulder blades is made easy. Accordingly, use of the seat device of the present invention for a driver's seat of a vehicle will allow the seated person to handle the steering wheel with ease.

Shoulder blades are pulled downward by lower trapezius muscles. Meanwhile, shoulder blades are supported by the respective shoulder blade aid ridges. Therefore, the shoulder blades are suppressed from being lowered. This will also help realizing easy turning of the shoulders.

In addition to the shoulder blade aid ridges, it is preferred, according to an additional feature of the present invention, that the upper body seat surface is further provided with lower rib horizontal ridges (simply horizontal ridges) which are substantially horizontal and positioned within a range covering the tenth to the twelfth ribs. The lower rib horizontal ridges also hinder a seated person's tilting motion of the upper body in the horizontal direction. Thus, with the horizontal tilting motion of the upper body being suppressed, the upright posture of the seated person is more easily retained.

It is preferred, according to an additional feature of the present invention, that an upper part of the upper body support surface at least including the rib support slant ridges and extending to the top is made vertically movable with respect to the seat surface.

A rib position relative to the seat surface comparatively greatly varies depending on individual persons. Therefore, when the upper part of the upper body support surface including the rib support slant ridges is made vertically movable, the position of the rib support slant ridges may be brought to the position matching the rib position which varies depending on individual persons.

On the other hand, an ilium position relative to the seat surface is not so different between individual persons. Thus, in the case where the upper body support surface includes not only the rib support slant ridges but also the ilium support projections, if a lower part of the upper body support surface including the ilium support projections is also moved in the vertical direction together with the upper part including the rib support slant ridges, the ilium support projections may not be butted against the respective ilium projections.

In this regard, it is preferred, according to an additional feature of the present invention, that the upper part of the upper body support surface including the rib support slant ridges is separated from the lower part including the ilium support projections. In this case, only the upper part is made vertically movable with respect to the seat surface. Thus, when the rib support slant ridges are vertically moved, the ilium support projections will be kept being butted against the respective ilium projections.

In the case where the upper body support surface includes not only a pair of shoulder blade aid ridges but also a pair of rib support slant ridges, it is preferred, as in a tenth aspect of the present invention, that an upper part of the upper body support surface at least including these two pairs of ridges and extending to the top is made vertically movable with respect to the seat surface. Thus, the rib support slant ridges and the shoulder blade aid ridges are vertically moved for adjustment with the positions of the ribs and shoulder blades, which vary depending on individual persons.

In the case where the upper body support surface is separated into the upper part including the rib support slant ridges and the lower part including the ilium support projections, it is preferred, as in an eleventh aspect of the present invention, that the upper part includes shoulder blade aid ridges. Thus, the rib support slant ridges and the shoulder blade aid ridges are adjusted to the positions of the ribs and shoulder blades, which vary depending on individual persons. In addition, the state where the ilium support projections are butted against the respective ilium projections can be retained.

It is preferred, according to an additional feature of the present invention, that the upper part of the upper body support surface includes lower rib horizontal ridges. The lower rib horizontal ridges are substantially horizontal and are positioned within a range covering the tenth to the twelfth ribs. Thus, the lower rib horizontal ridges can also be adjusted to a rib position that varies depending on individual persons.

According to additional features of the present invention, a pair of slant ridges and a pair of projections are provided, respectively. These slant ridges and projections are essentially the same as the rib support slant ridges and the ilium support projections, respectively. Thus, according to the last mentioned additional features of the present invention, the same advantages as those of the above-mentioned additional features are obtained which concern, respectively the upper part of the upper body support surface being made vertically movable with respect to the seat surface and being separated from the lower part including the ilium support projections.

According to additional features of the present inventions, substantially horizontal ridges are provided. These substantially horizontal ridges are essentially the same as the shoulder blade aid ridges. Thus, according to these additional features of the present invention, the same advantages as those of the above-mentioned additional features are obtained which concern the shoulder blade air ridges.

According to an additional feature of the present invention, a pair of substantially horizontal ridges are provided below the slant ridges. These substantially horizontal ridges are essentially the same as the lower rib horizontal ridges. Thus, according to this additional feature of the present invention, the same advantage as that of the preceding twelfth additional feature is obtained which concern the lower rib horizontal ridges.

### BRIEF DESCRIPTION OF THE DRAWINGS

In the accompanying drawings:
Fig. 1 is a perspective view illustrating a seat according to an embodiment of a seat device of the present invention;
Fig. 2 is a schematic front view illustrating a pelvis of an adult male;
Fig. 3 is a vertical cross sectional view illustrating the seat taken along a plane passing through a pair of ischium accommodating recesses (i.e. taken along a line III-III of Fig. 1);
Fig. 4 is a side view illustrating the pelvis of an adult male;
Fig. 5 is a schematic top view illustrating the pelvis of an adult male;
Fig. 6 is a cross-sectional view illustrating the seat taken along a plane passing through the centers of a left ilium support projection, a left ischium accommodating recess and a left thigh position reference ridge (i.e. taken along a line VI-VI of Fig. 1);
Fig. 7 is a cross-sectional view taken along a plane passing through a pair of ischium accommodating recesses (i.e. taken along a line VII-VII of Fig. 1);
Fig. 8 is a schematic structural view illustrating ribs, shoulder blades and backbones; and
Fig. 9 is an illustration conceptually explaining an inseparable portion and a separable and movable structure of a seat according to a modification of the present embodiment and a cover on the seat where the present invention can also be applied on the cover.

### DETAILED DESCRIPTION OF THE PREFERRED EMBODIMENTS

With reference to the accompanying drawings, hereinafter will be described an embodiment of a seat device for retaining person's seated position (conceptually includes the seated position retention device) according to the present invention.

In the embodiment, "retaining a person's seated position" intends to mean "assisting a person to retain their seating position."

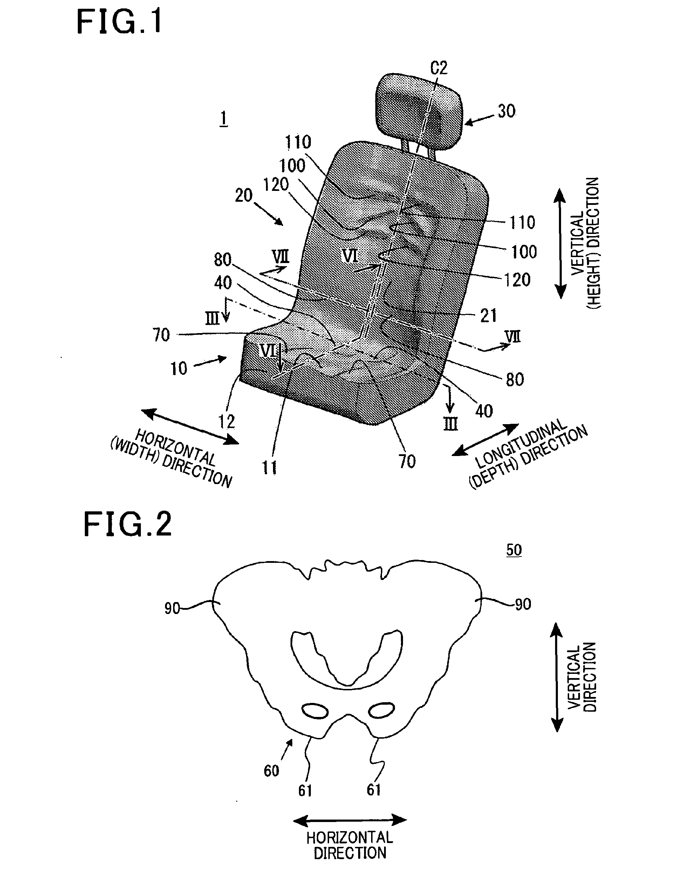

Fig. 1 is a perspective view illustrating a seat 1 according to an embodiment of the seat device with the seated position retention function. The seat 1 is used as a driver's seat of a vehicle.

The seat 1 includes a seat member 10, an upper body support member (or backrest) 20 and a headrest 30. The seat member 10, the upper body support member 20 and the headrest 30 have surfaces made of the same material, i.e. these members are covered with the same soft material, such as fabric or leather. The seat member 10 serves as a member to be seated by a person. The upper body support member 20 serves as a member for supporting the upper body, such as the lumbar back or upper body back, of the person. The headrest 30 serves as a member for supporting the back of the head of the person.

In the present embodiment, horizontal, longitudinal and vertical directions can be set to the seat 1 as illustrated in Fig. 1. The horizontal direction is a width direction along which the seat 1 extends laterally in its front view or its rear view, the longitudinal direction is a depth direction along which the seat 1 extends in one of its side views, and the vertical direction is a height direction along which the seat 1 extends from a vehicle floor, for example.

The seat member 10 has an upper surface, i.e. a seat surface 11, in which a pair of ischium accommodating recesses 40 and a pair of thigh position reference ridges 70 are formed. Fig. 2 is a schematic front view illustrating a pelvis 50 of an adult male. As shown in Fig. 2, two ischia 60 in the pelvis have respective two ischium projected portions 61. When a person is seated on the seat surface 11, the ischium accommodating recesses 40 accommodate the respective ischium projected portions 61 via the skin and the flesh.

The position of the ischium accommodating recesses 40 in the seat surface 11 is determined such that the ischium accommodating recesses 40 are ensured to be opposed to the respective ischium projected portions 61, when a person is seated on the seat surface 11. Thus, the pelvis and the back of the person will be supported by the upper body support member 20. The position of the ischium accommodating recesses 40 in the seat surface 11 is determined based on the size of the pelvis 50 of average adults.

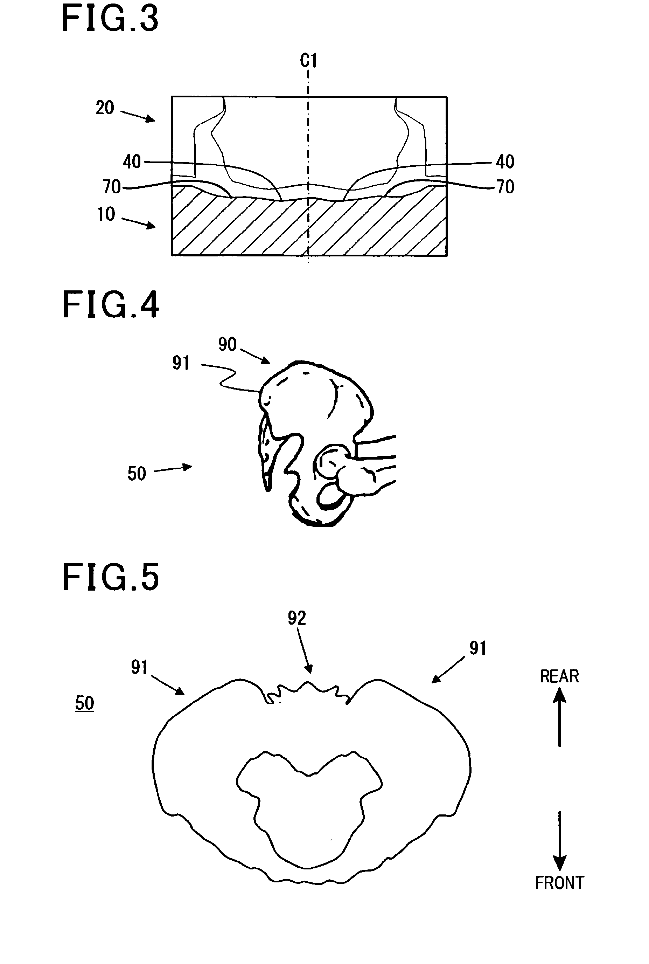

Fig. 3 is a vertical cross-sectional view illustrating the seat member 10, taken along a plane passing between the pair of ischium accommodating recesses 40 (i.e. taken along line III-III of Fig. 1). As shown in Fig. 3, the ischium accommodating recesses 40 each have a shape of a bowl. Specifically, each ischium accommodating recess 40 has a center at the deepest position thereof toward which the recess 40 is slanted to an extent of a shallow bowl.

As shown in Fig. 3, the ischium accommodating recesses 40 are provided so as to be symmetric with reference to a widthwise center plane C1 of the seat member 10. The two ischium accommodating recesses 40 have a spacing therebetween and a widthwise length, which are determined based on the spacing and the size of the two ischium projected portions 61 of average adults. Also, the degree of slant and the depth as well as a longitudinal length (perpendicular to the widthwise direction), not shown, of each of the ischium accommodating recesses 40 are also determined based on the size of the pair of ischium projected portions 61 of average adults.

The spacing and the size of the two ischium projected portions 61 of average adults here may be obtained taking into account both or either of adult males and adult females. Whether the adults taken into account should include both of males and females or either of males and females may be determined based on the usage of the seat 1. The average adults that should be taken into account are determined in the same manner as the above, in determining the position of the ischium accommodating recesses 40 in the seat surface 11. Also, depending on the usage, the position of the ischium accommodating recesses 40 may be determined based on the spacing and the size of a pair of ischium projected portions of children. Further, the position of the ischium accommodating recesses 40 may be determined based on the spacing and the size of a pair of ischium projected portions of an individual person.

Referring again to Fig. 1, the configuration of the seat surface 11 is further described. In the seat surface 11, the pair of thigh position reference ridges 70 are formed. Also, the seat surface 11 has sides located in the widthwise direction, both of which are slightly uplifted.

Each thigh has, on its back, a biceps femoris muscle and a semimembranosus muscle. There is a recess between these biceps femoris muscle and semimembranosus muscle. In other words, there is a portion between these biceps femoris muscle and semimembranosus muscle, which portion more easily sinks when pushed from immediately above these muscles than when pushed from outside. This recess resides in approximately the center in the widthwise direction of the back of a thigh. Since both of the biceps femoris muscle and the semimembranosus muscle extend in the longitudinal direction of the thigh, the recess therebetween also extends in the longitudinal direction.

The pair of the thigh position reference ridges 70 are each provided so as to be fitted to the recess between the biceps femoris muscle and the semimembranosus muscle. For this reason, specifically, the pair of thigh position reference ridges 70 are extended from near the position where the pair of ischium accommodating recesses 40 are formed toward a knee-side end portion 12 of the seat member 10. In this case, the two thigh position reference ridges 70 are made parallel to each other, or, alternatively, may be slightly distanced from each other as the ridges 70 near the knee-side end portion 12.

Further, the height, the longitudinal length and the widthwise length of each of the two thigh position reference ridges 70 as well as the spacing therebetween are determined such that each of the ridges 70 is easily fitted to the recess between the biceps femoris muscle and the semimembranosus muscle when a person is seated on the seat surface 11. The thigh position reference ridges 70 are each formed by placing a material beneath the material configuring the surface of the seat 1. The material placed beneath the material configuring the surface of the seat 1 has a rigidity that can maintain the shape of each of the thigh position reference ridges 70 when thighs are located on the respective ridges 70.

Hereinafter, the configuration of the upper body support member 20 is described. As shown in Fig. 1, the upper body support member 20 has an upper body support surface 21 in which a pair of ilium support projections 80 are formed at a lower portion thereof. The two ilium support projections 80 are formed at the same level from the seat surface 11 and have the same size and the same degree of projection.

Fig. 4 is a side view illustrating the pelvis 50, which is taken along a VI-VI line in Fig. 1. As shown in Fig. 4, ilia 90 configuring the upper portion of the pelvis 50 have respective projections 91 which are projected rearward (hereinafter referred to as "ilium projections 91"). Fig. 5 is a schematic top view illustrating the pelvis 50 of a male adult. As shown in Fig. 5, the ilium projections 91 are located on both sides of backbones 92, or located sandwiching the backbones 92. In each ilium projection 91 having a projected shape, the vertical length is small but, compared to this, the horizontal length is large. The ilium support projections 80 provided in the upper body support member 20 are configured to be fitted to the respective ilium projections 91 via the skin and the flesh of a seated person. The position of the ilium support projections 80 is determined based on the size of the pelvis of average adults. The average adults to be taken into account are determined in the same manner as mentioned above.

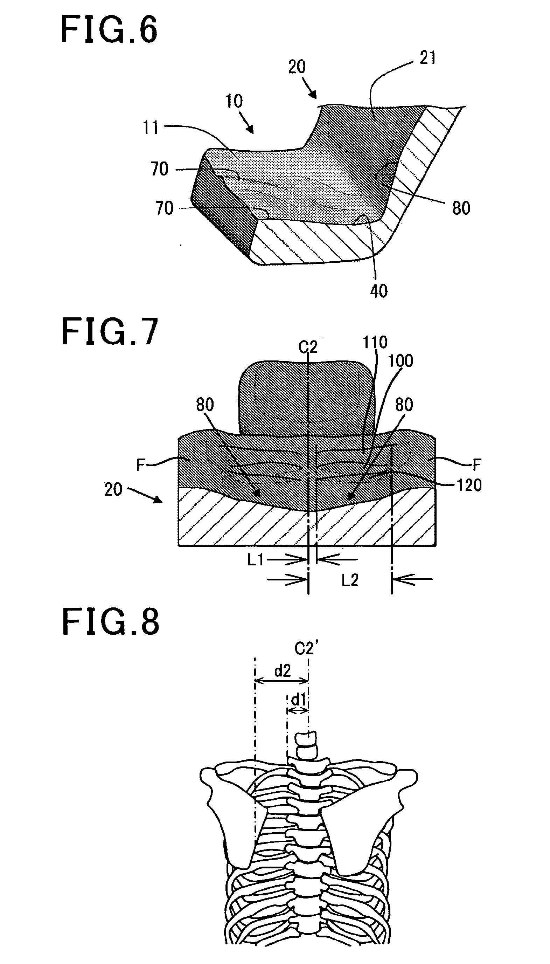

Fig. 6 is a cross-sectional view of the seat 1 taken along a plane passing through the centers of the left ilium support projection 80, the left ischium accommodating recess 40 and the left thigh position reference ridge 70 (i.e. taken along a line VI-VI of Fig. 1). Fig. 7 is a cross sectional view taken along a plane passing through the pair of ilium support projections 80 (i.e. taken along a line VII-VII of Fig. 1). As will be understood from Figs. 6 and 7, the shape of each ilium support projection 80 is not a projection slanted upward, downward and leftward and rightward centering on the peak point. Instead, the ilium support projection 80 has the most projected portion which is approximately linearly shaped, matching the shape of the corresponding ilium projection 91. Also, as will be understood from Fig. 7, each ilium support projection 80 is linearly slanted toward the widthwise center of the upper body support surface 21. In other words, the degree of projection of each ilium support projection 80 becomes smaller toward the widthwise center of the upper support surface 21. Such a slant of each ilium support projection 80 also helps the projection 80 more suitably fitted to each of the corresponding ilium projections 91.

The position of the two ilium support projections 80 relative to the seat surface 11 and the spacing between the two ilium support projections 80 are determined based on the spacing and the size of the pair of ilium projections 91 of average adults. The size of each ilium support projection 80 is determined ensuring to support the corresponding ilium projection 91 but ensuring not to support other portions of the upper body as much as possible. It should be appreciated that the average adults that should be taken into account in determining the position and the spacing of the ilium support projections 80 are determined in the same manner as in the case of the ischium accommodating recesses 40.

The ilium support projections 80 are each formed by placing a material beneath the material configuring the surface of the seat 1. The material placed beneath the material configuring the surface of the seat 1 has a rigidity that can maintain the shape of each of the ilium support projections 80 when the respective ilium projections 91 are supported by the ilium support projections 80. When the brake pedal or the accelerator pedal is fully stepped on, the depression force is large and thus the reaction force is also large. As a result, a large force may be imposed on the ilium support projections 80. For this reason, it is preferred that the ilium support projections 80 have a rigidity which is able to maintain the shape of themselves when such a large reaction force is imposed.

The upper body support surface 21 of the upper body support member 20 is further provided with a pair of rib support slant ridges 100 and a pair of shoulder blade aid ridges 110 and a pair of lower rib horizontal ridges 120.

The rib support slant ridges 100 are ensured to fit to ribs from beneath when the ribs descend with exhalation. The "ribs that descend with exhalation" mainly refer, here, to the ninth to the twelfth ribs to which respective inferior posterior serratus muscles are connected. Accordingly, the rib support slant ridges 100 are each located at a position that allows the ridge 100 to fit to any one of the ninth to twelfth ribs from beneath. For example, the rib support slant ridges 100, when being fitted to the respective ninth ribs from beneath, are each positioned between the ninth and the tenth ribs, being in contact with them.

The ninth to the twelfth ribs are connected to the ribs located at higher positions through body tissues, and thus the ribs located higher than the ninth ribs also descend with exhalation. Accordingly, for example, the rib support slant ridges 100 may be positioned between the eighth and the ninth ribs, being in contact with them.

As shown in Fig. 1, the two rib support slant ridges 100 of the present embodiment are spaced apart from each other. The length of the spacing is made larger than the thickness of the backbones so that the backbones are prevented from being pressed by the rib support slant ridges 100. Also, each one of the rib support slant ridges 100 is slanted downward from an end portion thereof near the other one of the rib support slant ridges 100 (backbone-side end portion) toward the other end portion thereof (outer end portion). The angle of this slant is ensured to substantially coincide with the inclination angle of the ribs against which the rib support slant ridges 100 are fitted.

The rib support slant ridges 100 each have the length, thickness and rigidity as described below. Specifically, the length may preferably be set to an average length of the ribs (e.g., the ninth ribs) to be fitted to. However, the length larger or smaller than this may also allow the rib support slant ridges 100 to exert the effects thereof. The thickness is ensured to be smaller than the distance between the pair of ribs to be fitted to and the pair of ribs located immediately beneath the pair of ribs to be fitted to, but to be large enough to support the pair of ribs to be fitted to. For example, the thickness may be approximately the same as the thickness of the pair of ribs to be fitted to. The rigidity is set to a level that will not allow a seated person to be hurt when the person leans back to the upper body support member 20, but will allow the rib support slant ridges 100 to adequately support the ribs.

In a person's seated state, the position of the person's ribs relative to the seat surface 11 may comparatively greatly differ, depending on the persons seated. For this reason, the position of the person's ribs relative to the seat surface 11 is determined based on an average body size. Nevertheless, depending on the persons seated, the position of the rib support slant ridges 100 may not match the position of the person's ninth ribs to be fitted to from beneath.

However, as mentioned above, the rib support slant ridges 100 do not have to be necessarily fitted to the ninth ribs but may be fitted to the tenth or the eleventh ribs, or alternatively, may be fitted to the eighth ribs. In addition, the inclination angles of these ribs do no greatly differ from each other. Accordingly, although the position of the rib support slant ridges 100 relative to the seat surface 11 is fixed in the present embodiment, a person of any seating height may be seated on the seat 1 to have the rib support slant ridges 100 fitted to the person's descending ribs from beneath in exhalation.

The pair of shoulder blade aid ridges 110 are positioned within a vertical range covering the fifth to the seventh ribs of a seated person. Accordingly, as shown in Fig. 1, the shoulder blade aid ridges 110 are located above the rib support slant ridges 100. The two shoulder blade aid ridges 110, each being substantially horizontal, are juxtaposed in the horizontal direction. The "substantially horizontal" here refers to that these ridges 110 are slanted to an extent of the inclination angles of the fifth to the seventh ribs in the state where the backbones of the seated person are upright.

Referring to Fig. 8, the shoulder blade aid ridges 110 are specifically described. Fig. 8 is a schematic structural view illustrating ribs, shoulder blades and backbones.

Each of the shoulder blade aid ridges 110 has a backbone-side end portion which is ensured to be positioned between a backbone-side end of the corresponding shoulder blade and the backbones. The length from a widthwise center line C2 (see Fig. 1) of the upper body support surface 21 to the backbone-side end portion of each shoulder blade aid ridge 110 is figured out as follows. Specifically, this length is equal to or larger than a horizontal length d1 from a backbone center line C2' to a backbone end, which corresponds to half the thickness of each backbone (see Fig. 8), but equal to or smaller than a horizontal length d2 from the backbone center line C2' to an outer end of a part of the corresponding shoulder blade, which falls within the range of from the fifth to the seventh ribs (see Fig. 8).

However, since shoulder blades are capable of various motions, the length d2 changes with the motion of each of the shoulder blades. Therefore, the length d2 that should be taken into account is rendered to be the minimum length d2 in the turning motion of the shoulder blades.

As mentioned above, in a person's seated state, the rib position of the person relative to the seat surface 11 may comparatively greatly differ, depending on the persons seated. For this reason, the rib position of the person relative to the seat surface 11 is determined based on an average body size. Also, the longitudinal length of each of the shoulder blade aid ridges 110 is not particularly limited if only the shoulder blade aid ridges 110 can be formed in the upper body support surface 21. For example, each of the shoulder blade aid ridges 110 may have a longitudinal length corresponding to approximately half the widthwise length of the back of a person of an average size.

The vertical position of the pair of lower rib horizontal ridges 120 is determined taking into account a seating height of average persons. Specifically, the lower rib horizontal ridges 120 are formed within a vertical range covering the tenth to the twelfth ribs which are located at the lowest in all of the ribs. Accordingly, as shown in Fig. 1, the lower rib horizontal ridges 120 are positioned below the rib support slant ridges 100 and above the ilium support projections 80.

The two lower rib horizontal ridges 120, each being substantially horizontal, are juxtaposed in the horizontal direction. The "substantially horizontal" here refers to that these ridges 120 are slanted to an extent of the inclination angles of the tenth to the twelfth ribs in the state where the backbones of the seated person are upright. The horizontal position and the length of the pair of lower rib horizontal ridges 120 are not particularly limited. However, it is preferable that the lower rib horizontal ridges 120 are provided so as not to be in contact with the backbones. To this end, the lower rib horizontal ridges 120 of the present embodiment each have a backbone-side end portion which is ensured to be distanced from the widthwise center line C2 of the upper body support surface 21 by the length d1 (see Fig. 8) or more.

In the present embodiment, each of the rib support slant ridges 100, each of the shoulder blade aid ridges 110 and each of the lower rib horizontal ridges 120 have respective lengths and positions, which are determined so that these ridges, 100, 110 and 120 each have the same lengths L1 and L2 from the widthwise center line C2 to the backbone-side end portion and to the outer end portion, as shown in Fig. 7.

In the upper body support surface 21 of the present embodiment, the portions F out of the outer end portions of the ridges 100, 110 and 120 are curved so as to be projected forward, as shown in Fig. 7. Thus, the upper body of a seated person is unlikely to be imbalanced in the horizontal direction.

Hereinafter will be described the advantages obtained from the seat 1 configured as described above with a person being seated. First, an advantage of facilitating retention of a seated person's posture is described.

The structure most related to this advantage is the pair of ilium support projections 80 and the pair of ischium accommodating recesses 40. The pair of ilium support projections 80 formed in the seat 1 support the pair of ilium projections 91 of a seated person. In other words, it is ensured that a force is applied to the pair of ilium projections 91 of a seated person from the pair of ilium support projections 80. Since the ilium projections 91 are located in an upper part of the pelvis, the application of a force to the ilium projections 91 means that the force is applied to the pelvis such that the person is allowed to lean forward. Thus, a submarining phenomenon in which a seated person's pelvis leans rearward is unlikely to be caused.

In a state where a seated person's pelvis does not lean rearward, the person's pair of ischium projected portions 61 are accommodated in the pair of ischium accommodating recesses 40 formed in the seat surface 11. Also, in a state where a seated person's pelvis does not lean rearward, the upper body is approximately upright, allowing the upper body to push the ischia with a large force. Therefore, a state where the ischia are accommodated in the respective ischium accommodating recesses 40 can be easily retained. For these reasons, a submarining phenomenon is unlikely to be caused and the seated person's upright posture is easily retained. In addition, since the seated person's upright posture is easily retained, the person will recover from fatigue quickly.

Further, when a seated person holds the person's feet on the floor as well, the reaction force transferring from the soles to the trunk is received by the ilium support projections 80 of the seat 1 via the person's ilium projections 91. The ilium support projections 80 are projected out of the area where they are provided. Accordingly, the reaction force mentioned above is mainly received by the ilium support projections 80, reducing the rate that the reaction force is received by portions other than the ilium support projections 80.

Specifically, the rate of reaction force received by the upper body support surface 21 via backbones and lumbar becomes small. Thus, the load that will be imposed on the backbones and lumbar is mitigated. Also, human's ilium projections 91 do not feel so much pain when a large force is applied from outside. For these reasons, compared to normal chairs that allow an upper body to be mainly supported by backbones and lumbar, the load imposed on a seated person's body is reduced even when the person fully holds the person's feet on the floor. Thus, a seated person also can fully step on an accelerator pedal or a brake pedal.

Thus, with the seat 1 of the present embodiment, a seated person's posture is easily retained by the ischium accommodating recesses 40 and the ilium support projections 80. In addition to this, with the seat 1 of the present embodiment, the horizontal motion of the person's upper body is suppressed by the rib support slant ridges 100, the shoulder blade aid ridges 110 and the lower rib horizontal ridges 120 provided in the upper body support surface 21. Thus, these ridges 110, 110 and 120 also contribute to easy retention of the posture of the seated person. Further, the thigh position reference ridges 70 provided in the seat surface 11 determine the positions of the thighs. This will also help easily retaining the posture of the seated person.

Hereinafter is described an advantage of easing seated person's breathing. The structure most related to this advantage is the rib support slant ridges 100.

There are various body tissues between ribs, which establish connection between ribs. Accordingly, if the rib support slant ridges 100 are not provided, muscles (e.g. inferior posterior serratus muscle) that contract in exhalation not only allow the ribs, to which the muscles are connected, to descend, but also allow upper ribs, to which the muscles are not connected, to descend.

In this regard, the seat 1 of the present embodiment is provided with the rib support slant ridges 100. These rib support slant ridges 100 are fitted to seated person's ribs from beneath, which descend in exhalation. Thus, upper ribs located around the chest are suppressed from descending, so that the chest is likely to be kept open. Accordingly, the seated person can breathe with ease.

In particular, the rib support slant ridges 100, when positioned between the ninth and the tenth ribs, will exert a large effect of easing the seated person's breathing. The reason for this is as follows. Specifically, the tenth and lower ribs are included in an abdominal muscle system to which the abdominal muscles are connected, and thus descend with the contraction of the abdominal muscles.

On the other hand, the ninth and upper ribs are not connected to the abdominal muscles but to inspiratory muscles. Therefore, when the rib support slant ridges 100 are positioned between the ninth and the tenth ribs, these ribs are efficiently suppressed from being lowered by the muscles in the abdominal muscle system, while the motion of the inspiratory muscles is not hindered. In this way, the advantage of easing the person's breathing is enhanced.

As described above, owing to the configuration such as of the ilium support projections 80 and the pair of ischium accommodating recesses 40, a seated person's posture is easily retained. In the posture retained such as by the ilium support projections 80 and the pair of ischium accommodating recesses 40, the person will receive less pressure on the chest. Accordingly, the configuration such as of the ilium support projections 80 and the pair of ischium accommodating recesses 40 also enhances the advantage of easing the person's breathing.

Hereinafter is described an advantage that a seated person's posture is easily restored to the original posture. The structure most related to this advantage is the thigh position reference ridges 70.

The thigh position reference ridges 70 are each provided so as to fit into a recess between the seated person's biceps femoris muscle and the semimembranosus muscle. When each thigh position reference ridge 70 is fitted to the recess between the biceps femoris muscle and the semimembranosus muscle, the position of the corresponding thigh is determined. With a normal chair, horizontal sway of a seated person's upper body usually allows the thighs to also move interlocking with the horizontal sway. However, in the present embodiment, the thigh position reference ridges 70 determine the positions of the respective thighs and the thighs stably stay at the positions.

Accordingly, when the upper body is imbalanced in the horizontal direction as well, the thighs are suppressed from moving in the horizontal direction interlocking with the horizontal imbalance of the upper body. Thus, the positions of the respective thighs serve as references. Accordingly, when the upper body is horizontally imbalanced, the upper body can be easily restored to the adequate original posture with reference to the stably positioned thighs. The adequately postured upper body will help reduce muscle fatigue of the seated person, and the person is unlikely to get tired. In addition, in order to drive a car safely, it is important to stably keep the upper body in position, and thus the seat 1 of the present embodiment is useful for safe driving.

Hereinafter is described an advantage that lower legs are allowed to be easily moved. The structure most related to this advantage is again the thigh position reference ridges 70.

With a normal chair, when lower legs are moved, the thighs are also moved interlocking with the motion of the lower legs. However, in the present embodiment, the thigh position reference ridges 70 determine the positions of the respective thighs and the thighs will stably stay in position.

Thus, when the lower legs are moved, the knees at the ends of the respective thighs serve as fulcrums. Specifically, when the lower legs are moved, the thighs are suppressed from moving interlocking with the motion of the lower legs, while only the lower legs are allowed to move. Thus, the lower legs are easily moved. Accordingly, the accelerator pedal or the brake pedal is easily operated. With the easy operation of the pedals, fatigue caused during driving is mitigated. It should be appreciated that the advantage of easily retaining a seated person's posture will also help mitigating fatigue caused during driving.

Hereinafter is described an advantage that horizontal imbalance of a seated person's posture is suppressed. The structures most related to this advantage are the shoulder blade aid ridges 110 and the lower rib horizontal ridges 120.

The shoulder blade aid ridges 110, being substantially horizontal, substantially hinder the tilting motion of a seated person's upper body in the horizontal direction. As a result, horizontal imbalance of the upper body is suppressed.

On the other hand, a rotational motion of the upper body centering the backbones will not be hindered by the shoulder blade aid ridges 110. Accordingly, when the seated person looks left or right, the horizontal sway of the upper body is suppressed, while the rotational motion of the upper body for turning the person's face to the left or right is accelerated. As a result, undesirable horizontal sway of the head during driving is suppressed.

The lower rib horizontal ridges 120 are substantially horizontal within a range covering the tenth to the twelfth ribs which are connected to the abdominal muscles. Thus, the motion of a seated person's abdominal muscles, which is guided by the lower rib horizontal ridges 120, becomes easier. This motion corresponds to the rotation of the lumbar. The rotation of the lumbar in other words is the rotational motion of the upper body centering the backbones. Therefore, resultantly, the horizontal sway of the upper body is also suppressed by the lower rib horizontal ridges 120. In order that the above advantage is obtained by the lower rib horizontal ridges 120, it is most favorable that the lower rib horizontal ridges 120 are brought into contact with the lower ends of the pair of tenth ribs.

Hereinafter is described an advantage that seated person's shoulders are rotated with ease. The structure most related to this advantage is again the shoulder blade aid ridges 110. When a person is seated on the seat 1, a backbone-side end portion of each of the shoulder blade aid ridges 110 is positioned between the backbones and a backbone-side end portion of the corresponding shoulder blade. Therefore, the backbone-side end portion of the shoulder blade aid ridge 110 is used as a fulcrum of turn, and thus the turning of the corresponding shoulder blade is aided. Thus, the motion of the shoulders accompanying turning of the shoulder blades becomes easier. In this way, when the person is seated on a driver's seat, handling of the steering wheel becomes easier.

Shoulder blades are pulled downward by lower trapezius muscles. Meanwhile, shoulder blades are supported by the respective shoulder blade aid ridges 110. Therefore, the shoulder blades are suppressed from being lowered. This will also help realizing easy turning of the shoulders.

The present invention is not limited to the embodiment described so far. Further, the present invention may also be modified and implemented in various other ways if falling within the scope of the invention as defined by the claims.

For example, although only a pair of rib support slant ridges 100 have been provided in the above embodiment, two or more pairs may be provided. For example, a first pair of rib support slant ridges may be provided between the ninth and the tenth ribs being in contact with them, and a second pair of rib support slant ridges may be provided between the tenth and the eleventh ribs being in contact with them. Thus, the ribs are further suppressed from being lowered, whereby a seated person's breathing is more eased.

In the embodiment described above, the rib support slant ridges 100, the shoulder blade aid ridges 110 and the lower rib horizontal ridges 120 have been fixed to the upper support surface 21 (i.e, the seat member 10 in the embodiment), or in other words, the positions of these ridges have been unchangeable in the vertical direction. However, positions of the objects to be supported, , i.e. a rib position and a shoulder blade position, relative to the seat surface 11 are different comparatively greatly depending on the persons seated. On the other hand, position of the ilium projections 91 relative to the seat surface 11 is comparatively less different between persons seated. The ilium projections 91 are supported by the respective ilium support projections 80 which are also formed in the upper body support surface 21.

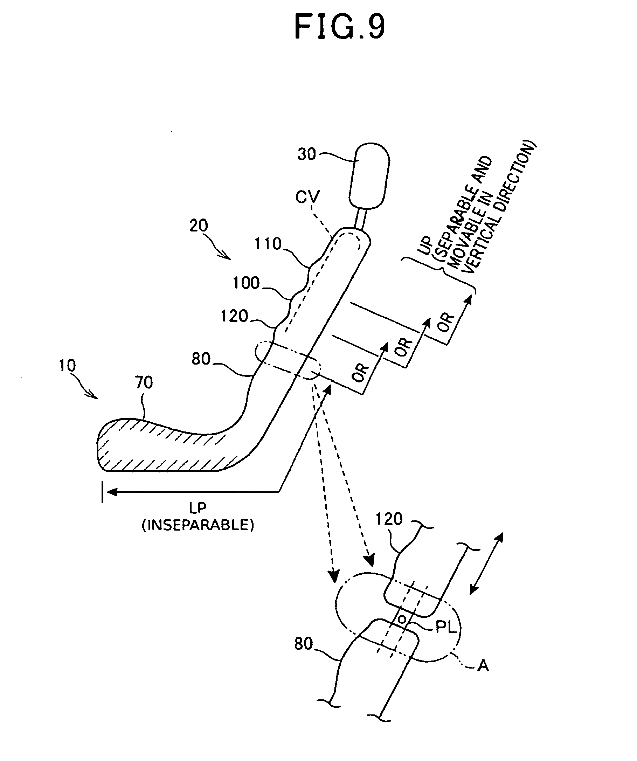

Considering this, the seat 1 may be configured as follows. Specifically, as pictorially shown in Fig. 9, the upper body support member 20 may be separated into a part that includes the ilium support projections 80 (hereinafter referred to as " lower upper-body support LP") and a part that includes at least one of the rib support slant ridges 100, the shoulder blade aid ridges 110 and the lower rib horizontal ridges 120 (hereinafter referred to as "upper upper-body support UP"). The lower upper-body support LP may be undetachably connected to the seat surface 11 (i.e., the seat member 10 in the embodiment) and the upper upper-body support UP may be made vertically movable with respect to the seat surface 11. In this case, the upper upper-body support UP is ensured to have a movable range including a variation range of the positions of the object ribs for the ridges 100, 110 and 120, relative to the seat surface 11, which may vary depending on persons seated.

A specific configuration is given here for the vertical movement of the upper upper-body support UP relative to the seat surface 11. For example, as conceptually shown in an enlarged part A of Fig. 9, a plurality of metal poles PL may be used for connecting the upper upper-body support UP and the lower upper-body support LP, in a similar manner to the connection between the upper body support 20 and the headrest 30.

In the upper body support surface 21, the part included in the upper upper-body support UP corresponds to the "upper part of the upper body support surface", while the part included in the lower upper-body support LP corresponds to the "lower part of the upper body support surface".

The above embodiment has been described taking as an example the seat 1. However, the present embodiment may be applied to chairs having legs. Such chairs having legs are usually used in a house and a variety of such chairs are available, with the materials of the seat surfaces and upper body support surfaces being wood, vinyl and the like. When the present invention is applied to such chairs as well, there is no particular limitation in the materials of the seat surfaces and the upper body support surfaces, and thus various materials similar to those of the chairs of conventional art may be used.

The present invention may be applied to covers CV for chairs and seats (refer to Fig. 9). The covers CV correspond to the seated position retention device to which the present invention can also be applied. When the present invention is applied to the covers CV as well, the upper upper-body support UP and the lower upper-body support LP may be separately provided. In this case, the lower upper-body support LP may be undetachably connected to the seat member and the upper upper-body support UP may be made vertically movable with respect to the seat member.

When the present invention is applied to the covers CV, a cover for the upper body support surface may not be provided but only a cover for the seat surface may be provided. Alternatively, a cover for the seat surface may not be provided but only a cover for the upper body support surface may be provided.

Though already stated in the foregoing, the three-dimensional sizes and positions (including slant angles) of the thigh position reference ridges 70, the ilium support projections 80, the lower rib horizontal ridges 120, the support slant ridges 100 and the shoulder blade aid ridges 110 can be provided as order-made products or ready-made products on the seat device or the cover. In the order-made product, the body sizes of each person who use the product are reflected in the sizes and positions of those ridges. In contrast, in the read-made products, the statistically acquired standard body sizes or statistically acquired, but categorized into a plurality of typical sizes (large, medium or small, for example) of persons are reflected in the sizes and positions of the ridges. In this respect, the sizes and positions of the ridges can be determined uniquely as a matter of fact.

## Claims

1. A seat device capable of retaining a person's seated position, including:
an upper body support member (20) having an upper body support surface (21) which supports the back of the person seated,
**characterized in that**
wherein the upper body support surface (21) has slant ridges (100) fitting to at least some of the ribs of the seated person,
the slant ridges (100) touching the ribs of the seated person from beneath and being slanted according to the ribs, the ribs descending with the seated person's exhalation.

2. The seat device of claim 1, wherein the slant ridges (100) for ribs are formed to support the back between a ninth rib and a tenth rib of the person seated.

3. The seat device of claim 1 or 2, wherein the seat device further including a seat member (10) having a seat surface (11) on which the person is seated.

4. The seat device of claim 3, wherein the seat device further including i) a pair of support projections (80) for ilia, being disposed on the upper body support surface (21),which may fit to a pair of ilium projections (91) of the person rearward when the person is seated and ii) a pair of accommodating recesses (40) for ischia, being disposed on the seat surface (11), which may accommodate therein a pair of ischium projected portions (61) being projected downward when the person is seated.

5. The seat device of claim 3 or 4, wherein the seat surface (11) further has a pair of reference ridges (70) which may fit to a recess between a biceps femoris muscle and a semimembranosus muscle of each thigh of the person seated.

6. The seat device of any one of claims 1 to 5, wherein the upper body support surface (21) further has a pair of aid ridges (110) for shoulder blades which is i) located so as to fit to a range of fifth to seventh ribs in a vertical direction of the seat member (10), ii) substantially horizontal to the seat surface (11), and iii) located such that a length from a center line of the upper body support surface (21) in a width direction thereof to a center-line-side end of each aid ridges (110) for shoulder blades is equal to or larger than a length from a backbone center line to a backbone end of the person and equal to or smaller than a length from the backbone center line to a shoulder blade of the person seated.

7. The seat device of claim 6, wherein the upper body support surface (21) further has horizontal ridges (120) for lower ribs which is i) located so as to fit to a range of tenth to twelfth ribs in the vertical direction and ii) substantially horizontal to the seat surface (11).

8. The seat device of claim 3, wherein a pair of the upper body support member (20) including the slant ridges (100) for the ribs is separately movable in the vertical direction.

9. The seat device of claim 4, wherein the upper body support member (20)is comprised of i) a lower portion having the support projections (80) for ilia and ii) an upper portion having the slant ridges (100) for ribs, the lower portion is inseparable from the seat member (10), and the upper portion is movable in a vertical direction against the lower portion.

10. The seat device of claim 6,
wherein the portion of the upper body support member (20) including the slant ridges (100) for the ribs and the aid ridges (110) for the shoulder blades is separately movable in the vertical direction.

11. The seat device of claim 9, wherein the upper portion of the upper body support member (20) has a pair of aid ridges (110) for shoulder blades which is i) located so as to fit to a range of fifth to seventh ribs of the ribs in a vertical direction of the seat member (10), ii) substantially horizontal to the seat surface (11), and iii) located such that a length from a center line of the upper body support surface (21) in a width direction thereof to a center-line-side end of each aid ridges (110) for shoulder blades is equal to or larger than a length from a backbone center line to a backbone end of the person and equal to or smaller than a length from the backbone center line to a shoulder blade of the person seated.

12. The seat device of claim 11, wherein the upper portion of the upper support member (20) has horizontal ridges (120) for lower ribs which is i) located so as to fit to a range of tenth to twelfth ribs in the vertical direction and ii) substantially horizontal to the seat surface (11).

13. The seat device of claim 1, wherein
the seat device further including a seat member (10) having a seat surface (11) on which a person is seated; and
the upper body support surface (21) has a pair of slant ridges (100) which is i) slanted at an angle substantially equal to an inclination of the ninth or tenth rib of the person, ii) located on both sides of a center line of the upper body support surface (21) in a width direction thereof, and iii) slanted as advancing from the center line; and
the upper body support member (20) is configured such that an upper portion, including at least the pair of slant ridges (100), of the upper body support member (20) is separately movable in the vertical direction.

14. The seat device of claim 13, wherein the upper body support surface (21) has a pair of support projections (80) for ilia, which fits to a pair of ilium projections (91) of the person, is located lower than the pair of slant ridges (100);
the upper body support member (20) is comprised of_i) a lower portion having the support projections (80) for ilia and ii) an upper portion having the slant ridges (100) for ribs, the lower portion is inseparable from the seat member (10); and
the upper portion is movable in a vertical direction against the lower portion.

15. The seat device of claim 13, wherein the upper body support surface (21) further has a first pair of substantially horizontal ridges (110) which is located at an upper portion of the pair of slant ridges (100), and
the upper body support member (20) is configured such that at least an upper portion of the upper body support member (20) on which the pair of slant ridges (100) and the pair of first substantially horizontal ridges (110) are disposed is movable in the vertical direction.

16. The seat device of claim 14, wherein the upper body support surface (21) further has a first pair of substantially horizontal ridges (110) which is located at an upper position of the pair of slant ridges (100).

17. The seat device of claim 15 or 16, wherein the upper support member (20) has a second pair of substantially horizontal ridges (120) which is located at a lower position of the pair of slant ridges (100).

## Patentansprüche

1. Sitzvorrichtung, die geeignet ist, eine Sitzposition einer Person zu erhalten, aufweisend:
ein Oberkörperstützelement (20), das eine Oberkörperstützfläche (21) aufweist,
die den Rücken der sitzenden Person stützt,
**dadurch gekennzeichnet, dass**
die Oberkörperstützfläche (21) geneigte Rippen (100) aufweist, die zumindest zu einigen der Rippen der sitzenden Person passen.
die geneigten Rippen (100) die Rippen der sitzenden Person von unten berühren und gemäß den Rippen geneigt sind, wobei sich die Rippen mit der Ausatmung der sitzenden Person senken.

2. Sitzvorrichtung nach Anspruch 1, wobei die geneigten Rippen (100) für Rippen so geformt sind, dass sie den Rücken zwischen einer neunten und zehnten Rippe der sitzenden Person stützen.

3. Sitzvorrichtung nach Anspruch 1 oder 2, wobei die Sitzvorrichtung außerdem ein Sitzelement (10) mit einer Sitzfläche (11), auf der die Person sitzt, aufweist.

4. Sitzvorrichtung nach Anspruch 3, wobei die Sitzvorrichtung außerdem i) ein Paar Stützvorsprünge (80) für Hüftknochen aufweist, die sich auf der Oberkörperstützfläche (21) befinden, die zu den Hüftknochen der Person (91) passen können, die nach hinten herausragen, wenn die Person sitzt und ii) ein Paar Sitzbein-Aufnahmeaussparungen (40) aufweist, das sich auf der Sitzfläche (11) befindet und das ein Paar hervorstehender Sitzbeinteile (61) aufnimmt, das nach unten ragt, wenn die Person sitzt.

5. Sitzvorrichtung nach Anspruch 3 oder 4, wobei die Sitzfläche (11) außerdem ein Paar Referenzrippen (70) aufweist, die sich in einer Aussparung zwischen einem Musculus biceps femoris und einem Musculus semimembranosus von jedem Schenkel der sitzenden Person befinden können.

6. Sitzvorrichtung nach einem der Ansprüche 1 bis 5, wobei die Oberkörperstützfläche (21) ein Paar Hilfsrippen (110) für das Schulterblatt aufweist, das i) so angeordnet ist, dass es zu dem Bereich von der fünften bis zur siebten Rippe in einer vertikalen Richtung des Sitzelements (10) passt, ii) größtenteils horizontal zu der Sitzfläche (11) verläuft und iii) so angeordnet ist, dass eine Länge von einer Mittellinie der Oberkörperstützfläche (21) in einer Richtung der Breite nach zu einem mittellinienseitigen Ende von jeder der Hilfsrippen (110) für das Schulterblatt größer oder gleich einer Länge von einer Wirbelsäulenmittellinie zu einem Wirbelsäulenende der Person ist und kleiner oder gleich einer Länge von der Wirbelsäulenmittellinie zu einem Schulterblatt der sitzenden Person ist.

7. Sitzvorrichtung nach Anspruch 6, wobei die Oberkörperstützfläche (21) außerdem Horizontalrippen (120) für untere Rippen aufweist, die i) so angeordnet sind, dass sie zu einem Bereich von der zehnten bis zur zwölften Rippe in vertikaler Richtung passen, und ii) größtenteils horizontal zu der Sitzfläche (11) verlaufen.

8. Sitzvorrichtung nach Anspruch 3, wobei ein Paar von dem Oberkörperstützelement (20) einschließlich der geneigten Rippen (100) für die Rippen getrennt in vertikaler Richtung beweglich ist.

9. Sitzvorrichtung nach Anspruch 4, wobei das Oberkörperstützelement (20) folgendes aufweist: i) einen unteren Teil, der die Stützvorsprünge (80) für Hüftknochen aufweist und ii) einen oberen Teil, der die geneigten Rippen (100) für Rippen aufweist, wobei der untere Teil nicht von dem Sitzelement (10) getrennt werden kann und der obere Teil in vertikaler Richtung gegen den unteren Teil beweglich ist.

10. Sitzvorrichtung nach Anspruch 6,
wobei der Teil des Oberkörperstützelements (20), das die geneigten Rippen (100) für die Rippen und die Hilfsrippen (110) für das Schulterblatt beinhaltet, separat in vertikaler Richtung beweglich ist.

11. Sitzvorrichtung nach Anspruch 9, wobei der obere Teil des Oberkörperstützelements (20) ein Paar Hilfsrippen (110) für das Schulterblatt aufweist, das i) so angeordnet ist, dass es zu dem Bereich von der fünften bis zur siebten Rippe in einer vertikalen Richtung des Sitzelements (10) passt, ii) größtenteils horizontal zu der Sitzfläche (11) verläuft und iii) so angeordnet ist, dass eine Länge von einer Mittellinie der Oberkörperstützfläche (21) in einer Richtung der Breite nach zu einem mittellinienseitigen Ende von jeder der Hilfsrippen (110) für das Schulterblatt größer oder gleich einer Länge von einer Wirbelsäulenmittellinie zu einem Wirbelsäulenende der Person ist und kleiner oder gleich einer Länge von der Wirbelsäulenmittellinie zu einem Schulterblatt der sitzenden Person ist.

12. Sitzvorrichtung nach Anspruch 11, wobei der obere Teil des Oberkörperstützelements (20) Horizontalrippen (120) für untere Rippen aufweist, welcher i) so angeordnet sind, dass dieser zu einem Bereich von der zehnten bis zur zwölften Rippe in vertikaler Richtung passt, und ii) größtenteils horizontal zu der Sitzfläche (11) verläuft.

13. Sitzvorrichtung nach Anspruch 1, wobei
die Sitzvorrichtung außerdem ein Sitzelement (10) mit einer Sitzfläche (11), auf der eine Person sitzt, aufweist; und
wobei die Oberkörperstützfläche (21) ein Paar geneigter Rippen (100) aufweist, das i) in einem Winkel geneigt ist, der größtenteils mit einem Neigungswinkel der neunten oder zehnten Rippe der Person identisch ist, wobei ii) sich die geneigten Rippen (100) auf beiden Seiten einer Mittellinie der Oberkörperstützfläche (21) in einer Richtung der Breite nach befinden und iii) ab der Mittellinie geneigt verlaufen; und
das Oberkörperstützelement (20) so konfiguriert ist, dass ein oberer Teil des Oberkörperstützelements (20), das zumindest das Paar geneigter Rippen (100) beinhaltet, in vertikaler Richtung separat beweglich ist.

14. Sitzvorrichtung nach Anspruch 13, wobei die Oberkörperstützfläche (21) ein Paar Stützvorsprünge (80) für Hüftknochen aufweist, die zu einem Paar Hüftknochen der Person (91) passen und tiefer angeordnet sind als das Paar geneigter Rippen (100);
das Oberkörperstützelement (20) i) einen unteren Teil mit den Stützvorsprüngen (80) für Hüftknochen und ii) einen oberen Teil mit geneigten Rippen (100) für Rippen aufweist, wobei der untere Teil nicht von dem Sitzelement (10) getrennt werden kann; und
der obere Teil in vertikaler Richtung gegen den unteren Teil beweglich ist.

15. Sitzvorrichtung nach Anspruch 13, wobei die Oberkörperstützfläche (21) außerdem ein erstes Paar größtenteils horizontaler Rippen (110) aufweist, das sich an einem oberen Teil des Paars geneigter Rippen (100) befindet, und
das Oberkörperstützelement (20) so konfiguriert ist, dass zumindest ein oberer Teil des Oberkörperstützelements (20), auf dem sich das Paar geneigter Rippen (100) und das erste Paar größtenteils horizontaler Rippen (110) befinden, in vertikaler Richtung beweglich ist.

16. Sitzvorrichtung nach Anspruch 14, wobei die Oberkörperstützfläche (21) außerdem ein erstes Paar größtenteils horizontaler Rippen (110) aufweist, das sich an einer oberen Position des Paars geneigter Rippen (100) befindet.

17. Sitzvorrichtung nach Anspruch 15 oder 16, wobei das Oberkörperstützelement (20) ein zweites Paar größtenteils horizontaler Rippen (120) aufweist, das an einer unteren Position des Paars geneigter Rippen (100) platziert ist.

## Revendications

1. Dispositif de siège destiné à garder une position assise d'une personne, comportant :
un élément (20) de support de haut de corps ayant une surface (21) de support de haut de corps qui supporte le dos de la personne assise,
**caractérisé en ce que**
la surface (21) de support de haut de corps comporte des stries inclinées (100) s'ajustant à au moins une partie des côtes de la personne assise,
les stries inclinées (100) touchant les côtes de la personne assise depuis le dessous et étant inclinées selon les côtes, les côtes descendant avec l'expiration de la personne assise.

2. Dispositif de siège de la revendication 1, dans lequel les stries inclinées (100) pour les côtes sont formées pour supporter le dos entre une neuvième côte et une dixième côte de la personne assise.

3. Dispositif de siège de la revendication 1 ou 2, dans lequel le dispositif de siège comportant en outre un élément de siège (10) ayant une surface de siège (11) sur laquelle la personne est assise.

4. Dispositif de siège de la revendication 3, dans lequel le dispositif de siège comportant en outre i) une paire de projections de support (80) pour les ilions, étant disposée sur la surface (21) de support de haut de corps, qui est adaptée pour s'ajuster à une paire de projections d'ilion (91) de la personne vers l'arrière lorsque la personne est assise et ii) une paire d'évidements de réception (40) pour les ischions, étant disposée sur la surface de siège (11), qui est adaptée pour recevoir dedans une paire de parties projetées d'ischion (61) étant projetée vers le bas lorsque la personne est assise.

5. Dispositif de siège de la revendication 3 ou 4, dans lequel la surface de siège (11) comporte en outre une paire de stries de référence (70) qui est adaptée pour s'ajuster à un évidement entre un muscle biceps crural et un muscle demi-membraneux de chaque cuisse de la personne assise.

6. Dispositif de siège de l'une quelconque des revendications 1 à 5, dans lequel la surface (21) de support de haut de corps comporte en outre une paire de stries d'aide (110) pour les omoplates qui est i) située de façon à s'ajuster à une série de la cinquième à la septième côte dans une direction verticale de l'élément de siège (10), ii) essentiellement horizontale à la surface de siège (11), et iii) située de sorte qu'une longueur depuis une ligne centrale de la surface (21) de support de haut de corps dans sa direction de largeur jusqu'à une extrémité côté ligne centrale de chacune des stries d'aide (110) pour les omoplates soit supérieure ou égale à une longueur depuis un axe de colonne vertébrale jusqu'à une extrémité de colonne vertébrale de la personne et inférieure ou égale à une longueur depuis l'axe de colonne vertébrale jusqu'à une omoplate de la personne assise.

7. Dispositif de siège de la revendication 6, dans lequel la surface (21) de support de haut de corps comporte en outre des stries horizontales (120) pour les côtes inférieures qui sont i) situées de façon à s'ajuster à une série de la dixième à la douzième côte dans la direction verticale et ii) essentiellement horizontales à la surface de siège (11).

8. Dispositif de siège de la revendication 3, dans lequel une paire d'éléments (20) de support de haut de corps comportant les stries inclinées (100) pour les côtes peut se déplacer séparément dans la direction verticale.

9. Dispositif de siège de la revendication 4, dans lequel l'élément (20) de support de haut de corps est constitué i) d'une partie inférieure ayant les projections de support (80) pour les ilions et ii) d'une partie supérieure ayant les stries inclinées (100) pour les côtes, la partie inférieure est inséparable de l'élément de siège (10), et la partie supérieure peut se déplacer dans une direction verticale par rapport la partie inférieure.

10. Dispositif de siège de la revendication 6,
dans lequel la partie de l'élément (20) de support de haut de corps comportant les stries inclinées (100) pour les côtes et les stries d'aide (110) pour les omoplates peut se déplacer séparément dans la direction verticale.

11. Dispositif de siège de la revendication 9, dans lequel la partie supérieure de l'élément (20) de support de haut de corps comporte une paire de stries d'aide (110) pour les omoplates qui est i) située de façon à s'ajuster à une série de la cinquième à la septième côte des côtes dans une direction verticale de l'élément de siège (10), ii) essentiellement horizontale à la surface de siège (11), et iii) située de sorte qu'une longueur depuis une ligne centrale de la surface (21) de support de haut de corps dans sa direction de largeur jusqu'à une extrémité côté ligne centrale de chacune des stries d'aide (110) pour les omoplates soit supérieure ou égale à une longueur depuis un axe de colonne vertébrale jusqu'à une extrémité de colonne vertébrale de la personne et inférieure ou égale à une longueur depuis l'axe de colonne vertébrale jusqu'à une omoplate de la personne assise.

12. Dispositif de siège de la revendication 11, dans lequel la partie supérieure de l'élément (20) de support de haut de corps comporte des stries horizontales (120) pour les côtes inférieures qui sont i) situées de façon à s'ajuster à une série de la dixième à la douzième côte dans la direction verticale et ii) essentiellement horizontales à la surface de siège (11).

13. Dispositif de siège de la revendication 1, dans lequel
le dispositif de siège comportant en outre un élément de siège (10) ayant une surface de siège (11) sur laquelle une personne est assise ; et
la surface (21) de support de haut de corps comporte une paire de stries inclinées (100) qui est i) inclinée à un angle essentiellement égal à l'inclinaison de la neuvième ou dixième côte de la personne, ii) située sur les deux côtés d'une ligne centrale de la surface (21) de support de haut de corps dans sa direction de largeur, et iii) inclinée en avançant à partir de l'axe ; et
l'élément (20) de support de haut de corps est configuré de sorte qu'une partie supérieure, comportant au moins la paire de stries inclinées (100), de l'élément (20) de support de haut de corps puisse se déplacer séparément dans la direction verticale.

14. Dispositif de siège de la revendication 13, dans lequel la surface (21) de support de haut de corps comporte une paire de projections de support (80) pour les ilions, qui s'ajuste à une paire de projections d'ilion (91) de la personne, est située plus bas que la paire de stries inclinées (100) ;
l'élément (20) de support de haut de corps est constitué i) d'une partie inférieure ayant les projections de support (80) pour les ilions et ii) d'une partie supérieure ayant les stries inclinées (100) pour les côtes, la partie inférieure est inséparable de l'élément de siège (10) ; et
la partie supérieure peut se déplacer dans une direction verticale par rapport à la partie inférieure.

15. Dispositif de siège de la revendication 13, dans lequel la surface (21) de support de haut de corps comporte en outre une première paire de stries essentiellement horizontales (110) qui est située au niveau d'une partie supérieure de la paire de stries inclinées (100), et
l'élément (20) de support de haut de corps est configuré de sorte qu'au moins une partie supérieure de l'élément (20) de support de haut de corps, sur laquelle la paire de stries inclinées (100) et la première paire de stries essentiellement horizontales (110) sont disposées, puisse se déplacer dans la direction verticale.

16. Dispositif de siège de la revendication 14, dans lequel la surface (21) de support de haut de corps comporte en outre une première paire de stries essentiellement horizontales (110) qui est située au niveau d'une position supérieure de la paire de stries inclinées (100).

17. Dispositif de siège de la revendication 15 ou 16, dans lequel l'élément (20) de support de haut de corps comporte une deuxième paire de stries essentiellement horizontales (120) qui est située au niveau d'une position inférieure de la paire de stries inclinées (100).
